# DEMANDE DE BREVET EUROPEEN

(11) **EP 1 327 898 A1**
(43) Date de publication de la demande: **16.07.2003**
(21) Numéro de dépôt: 02293230.5
(22) Date de dépôt: 24.12.2002
(51) Int. Cl.: G02B 6/22

(54) **Fibre optique à profil d'indice complexe en forme d'anneaux**

(30) Priorité: 14.01.2002 FR 0200379
(71) Demandeur: ALCATEL, 75008 Paris (FR)
(72) Inventeur: Beaumont, Florent, 78700 Conflans Ste Honorine (FR); Gorlier, Maxime, 75017 Paris (FR); Sillard, Pierre, 78150 Le Chesnay (FR); Fleury, Ludovic, 78390 Bois d'Arcy (FR); Nouchi, Pascale, 78600 Maisons-Lafitte (FR); de Montmorillon, Louis-Anne, 75017 Paris (FR)
(74) Mandataire: Vigand, Régis Louis Michel

(57) **Abrégé**

L'invention propose une fibre optique, qui présente un profil d'indice de consigne avec plus de six échelons. Elle a aussi à une longueur d'onde de 1550 nm une dispersion chromatique positive, un rapport du carré de la surface effective à la pente de dispersion chromatique supérieur à 100 000 µm⁴.nm².km/ps.

L'invention permet d'améliorer les caractéristiques de propagation des fibres de l'état de la technique, en optimisant le profil d'indice. Elle peut être mise en oeuvre avec les techniques classiques de fabrication de préformes par VAD ou MCVD.

## Description

La présente invention concerne le domaine des transmissions par fibre optique, et plus spécifiquement, les caractéristiques des fibres optiques utilisées dans les systèmes de transmission.

Pour des fibres optiques, on qualifie généralement le profil d'indice en fonction de l'allure du graphe de la fonction qui associe au rayon de la fibre l'indice de réfraction. On représente de façon classique sur les abscisses la distance r au centre de la fibre, et sur les ordonnées la différence entre l'indice de réfraction et l'indice de réfraction de la gaine de la fibre. On parle ainsi de profil d'indice en "échelon", en "trapèze" ou en "triangle" pour des graphes qui présentent des formes respectives d'échelon, de trapèze ou de triangle. Ces courbes sont généralement représentatives du profil théorique ou de consigne de la fibre, les contraintes de fabrication de la fibre pouvant conduire à un profil sensiblement différent. On appelle dans la suite "échelon" d'indice une partie du profil de consigne - donc une partie de la fibre qui en section a une forme de disque ou d'anneau - dans laquelle l'indice présente une valeur sensiblement constante.

Dans les nouveaux réseaux de transmission à hauts débits et multiplexés en longueurs d'onde, il est avantageux de gérer la dispersion chromatique, notamment pour des débits supérieurs ou égaux à 40 Gbit/s ou à 160 Gbit/s ; l'objectif est d'obtenir, pour toutes les valeurs de longueurs d'onde du multiplex, une dispersion chromatique cumulée sensiblement nulle sur la liaison, de sorte à limiter l'élargissement des impulsions. Une valeur cumulée de quelques dizaines de ps/nm pour la dispersion est en général acceptable. Il est aussi intéressant de limiter la pente de dispersion chromatique cumulée sur la plage du multiplex de sorte à éviter ou limiter les distorsions entre les canaux du multiplex ; ceci est d'autant plus important que le nombre de canaux augmente. Cette pente de la dispersion est classiquement la dérivée de la dispersion chromatique par rapport à la longueur d'onde. Enfin il faut également tenir compte du fait que l'amplitude des effets non-linéaires dans une fibre est inversement proportionnelle à la surface effective de la fibre. La surface effective devrait donc idéalement être choisie la plus élevée possible pour limiter les effets non-linéaires. Cependant, certains effets non-linéaires, tels que l'effet Raman, sont utiles pour améliorer les marges des systèmes de transmission.

On utilise classiquement comme fibre de ligne pour les systèmes de transmission à fibres optiques des fibres à saut d'indice, appelées aussi fibres SMF (acronyme de l'anglais "Single Mode Fiber"). La demanderesse commercialise ainsi sous référence Alcatel 6900 une fibre monomode à saut d'indice présentant une longueur d'onde λ₀ d'annulation de la dispersion chromatique entre 1300 et 1320 nm, et une dispersion chromatique inférieure ou égale à 3,5 ps/(nm.km) dans une plage de 1285-1330 nm, et de l'ordre de 17 ps/(nm.km) à 1550 nm. La pente de dispersion chromatique à 1550 nm est de l'ordre de 0,06 ps/(nm².km). Cette fibre présente typiquement un rapport C/C' de la dispersion chromatique à la pente de dispersion chromatique compris entre 250 et 370 nm à 1550 nm. Cette fibre présente une surface effective à 1550 nm voisine de 80 µm². Pour une telle fibre, à une longueur d'onde de 1550 nm, le rapport du carré de la surface effective à la pente de dispersion chromatique est de l'ordre de 107 000 µm⁴.nm².km/ps. Une telle fibre présente un profil simple, avec un seul échelon ; elle présente un profil d'indice avec une partie centrale d'indice sensiblement constant et supérieur à l'indice de la gaine.

Sont aussi apparues sur le marché des fibres à dispersion décalée, ou DSF (acronyme de l'anglais "Dispersion shifted fibers"). On qualifie de NZ-DSF+ (acronyme de l'anglais "non-zero dispersion shifted fibers") des fibres à dispersion décalée, présentant une dispersion chromatique non-nulle et positive pour les longueurs d'onde auxquelles elles sont utilisées, typiquement autour de 1550 nm. Ces fibres présentent pour ces longueurs d'onde une dispersion chromatique faible, typiquement inférieure à 11 ps/(nm.km) à 1550 nm, et une pente de dispersion chromatique entre 0,04 et 0,1ps/(nm².km). Parmi les profils possibles de ces fibres, on peut citer les profils à trois échelons, avec une partie centrale en trapèze ou en rectangle, entourée d'une tranchée déprimée et d'un anneau ; on peut aussi citer les profils à quatre échelons (appelés aussi profil "quadruple clad" ou gaine quadruple en langue anglaise), avec une partie centrale en rectangle, entourée d'une première tranchée déprimée, d'un anneau et d'une deuxième tranchée déprimée.

FR-A-99 02 028 propose une fibre de ligne, tout particulièrement adaptée à une transmission à multiplexage en longueurs d'onde dense, avec un espacement entre les canaux de 100 GHz ou moins pour un débit par canal de 10 Gbit/s ; cette fibre présente pour une longueur d'onde de 1550 nm une surface effective supérieure ou égale à 60 µm², une dispersion chromatique comprise entre 6 et 10 ps/(nm.km), et une pente de dispersion chromatique inférieure à 0,07 ps/(nm².km). La demanderesse commercialise sous la référence TeraLight une fibre qui présente à 1550 nm une dispersion chromatique C typique de 8 ps/(nm.km) et une pente de dispersion chromatique C' de 0,058 ps/(nm².km). Cette fibre présente une surface effective S_{eff} de l'ordre de 65 µm², et un rapport du carré de la surface effective à la pente de dispersion chromatique qui est de l'ordre de 73 000 µm⁴.nm².km/ps, à une longueur d'onde de 1550 nm.

FR-A-00 02 316 décrit une fibre optique qui est utilisée comme fibre de ligne, et dont la dispersion chromatique est compensée par de la fibre de compensation de dispersion classiquement utilisée pour une fibre à saut d'indice. Cette fibre présente pour une longueur d'onde de 1550 nm une dispersion chromatique comprise entre 5 et 11 ps/(nm.km), un rapport entre la dispersion chromatique et la pente de dispersion chromatique entre 250 et 370 nm, une surface effective au moins égale à 50 µm². Il est proposé dans ce document que le rapport entre le carré de la surface effective et la pente de dispersion chromatique soit supérieur à 80 000 µm⁴.nm².km/ps. Ce rapport est en fait représentatif du compromis entre la surface effective - qui devrait être aussi grande que possible - et la pente de dispersion chromatique - qui devrait être aussi faible que possible. Les fibres proposées dans ce document présentent un profil à trois échelons avec une partie centrale en rectangle entourée d'une partie enterrée et d'un anneau.

WO-A-99 08 142 décrit une fibre à forte dispersion chromatique négative, présentant un profil complexe.

Il est donc intéressant de disposer d'une fibre, qui permette une transmission sur une bande aussi large que possible, qui présente une pente de dispersion chromatique aussi faible que possible, une surface effective aussi importante que possible ou un rapport du carré de la surface effective à la pente de dispersion chromatique qui soit aussi important que possible.

Plus précisément, l'invention propose une fibre optique présentant un profil d'indice de consigne avec plus de six échelons et une dispersion chromatique positive à une longueur d'onde de 1550 nm.

La fibre présente avantageusement une ou plusieurs des caractéristiques de propagation suivantes, mesurées à une longueur d'onde de 1550 nm :
- un rapport du carré de la surface effective à la pente de dispersion chromatique supérieur à 90 000 µm⁴.nm².km/ps ;
- un rapport du carré de la surface effective à la pente de dispersion chromatique supérieur à 100 000 µm⁴.nm².km/ps ;
- une pente de dispersion chromatique inférieure ou égale à 0,08 ps/(nm².km) ;
- une dispersion chromatique inférieure ou égale à 14 ps/(nm.km).
   Du point de vue du profil, les échelons peuvent présenter une épaisseur identique ; inversement, au moins deux échelons peuvent avoir une épaisseur différente.
   L'invention propose aussi un système de transmission présentant comme fibre de ligne une telle fibre.
   D'autres caractéristiques et avantages de l'invention apparaîtront à la lecture de la description qui suit de modes de réalisation de l'invention, donnés à titre d'exemple et en référence aux dessins annexés, qui montrent
- figures 1 et 2, des représentations schématiques du profil d'indice de consigne de fibres de l'état de la technique ;
- figure 3, une représentation schématique du profil d'indice de consigne d'une fibre selon un mode de réalisation de l'invention.

L'invention propose, pour améliorer les caractéristiques de propagation des fibres de l'état de la technique, de prévoir un profil d'indice de consigne présentant un nombre d'échelons supérieur ou égal à six. Plus spécifiquement, par rapport aux fibres de l'état de la technique, l'invention propose de remplacer les valeurs constantes de l'indice dans une région donnée par une pluralité de valeurs de l'indice dans cette même plage ; cet accroissement du nombre de valeurs discrètes de l'indice dans la fibre permet de mieux choisir les caractéristiques optiques de la fibre. On peut aussi faire varier la position dans la fibre des échelons d'indice, notamment en fonction du procédé de fabrication utilisé.

On donne dans la suite des exemples de mise en oeuvre de l'invention, en comparaison avec trois fibres de l'état de la technique.

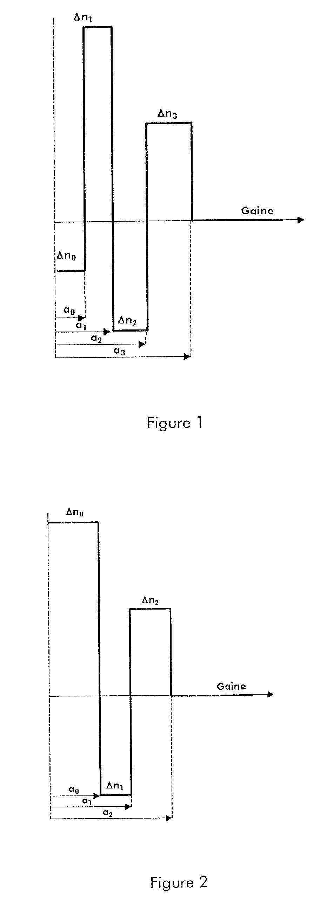

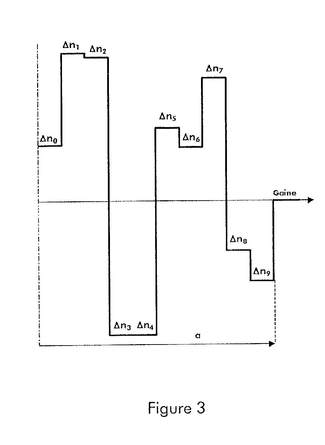

Dans le premier exemple, on a considéré une fibre de l'état de la technique à dispersion décalée. Cette fibre est celle du tableau 3 et de la figure 3 du WO-A-00 65387. La figure 1 montre le profil d'indice de consigne de cette fibre. Le profil d'indice est un profil d'indice du type coaxial avec anneau, qui présente, en partant du centre de la fibre :
- une partie centrale avec un indice sensiblement constant ;
- une première partie annulaire d'indice supérieur à l'indice de la gaine, et aussi supérieur à l'indice de la partie centrale,
l'ensemble constituant une fibre à profil dit "coaxial".

Autour de la première partie annulaire, la fibre présente une partie enterrée d'indice inférieure à celui de la gaine, puis une deuxième partie annulaire d'indice supérieur à celui de la gaine, formant un anneau autour du profil coaxial. La figure 1 montre ce profil.

On note dans la suite Δn₀ la différence entre l'indice de la partie centrale enterrée et l'indice de la gaine de la fibre, Δn₁ la différence entre l'indice de la partie centrale et l'indice de la gaine de la fibre, Δn₂ la différence entre l'indice de la tranchée enterrée et l'indice de la gaine de la fibre et Δn₃ la différence entre l'indice de l'anneau et l'indice de la gaine de la fibre. Comme expliqué plus haut, Δn₁ et Δn₃ ont une valeur positive, tandis que Δn₀ et Δn₂ ont une valeur négative. On note a₀ le rayon extérieur de la partie centrale enterrée d'indice sensiblement constant, a₁ le rayon extérieur de la partie centrale d'indice sensiblement constant, a₂ le rayon extérieur de la tranchée enterrée et a₃ le rayon extérieur de l'anneau. La fibre de l'état de la technique de la figure 1 peut présenter les valeurs d'indice (exprimées en % par rapport à l'indice de la silice) et de rayons proposées dans le tableau 1 ci-dessous, avec les notations précisées à l'instant.

**Tableau 1**

| a₀ [µm] | a₁ [µm] | a₂ [µm] | a₃ [µm] | Δn₀ [%] | Δn₁ [%] | Δn₂ [%] | Δn₃ [%] |
|---|---|---|---|---|---|---|---|
| 1,0 | 4,0 | 6,3 | 7,9 | -0,1 | 0,95 | -0,1 | 0,4 |

Avec ce profil, la fibre de la figure 1 présente les caractéristiques optiques données dans le tableau 2 ; on note S_{eff} la surface effective, C' la pente de dispersion chromatique, S_{eff}²/C' le rapport du carré de la surface effective à la pente de dispersion chromatique, λ₀ la longueur d'onde d'annulation de la dispersion chromatique et 2W₀₂ le diamètre de mode. Ces quantités sont données dans le tableau dans les unités respectives suivantes : µm², ps/(nm².km), µm⁴.nm².km/ps, nm et µm. Elles sont mesurées pour une longueur d'onde de 1550 nm.

**Tableau 2**

| | S_{eff} [µm²] @1550nm | C [ps/(nm.km)] @1550nm | C' [ps/(nm².km)] @1550nm | S_{eff}²/C' [µm⁴.nm².km/ps] @1550nm | λ₀ [nm] | 2W₀₂ [µm] @1550nm |
|---|---|---|---|---|---|---|
| WO-A-0065387 | 73 | ∼4 | 0,073 | 73000 | 1500 | 9,06 |

Selon l'invention, on a remplacé les quatre "échelons" d'indice de cette fibre - correspondant à la première tranchée enterrée, à la première partie annulaire, à la seconde tranchée enterrée et à l'anneau - par six échelons ou plus. Le tableau 3 ci-dessous donne les caractéristiques des profils envisagés, tandis que le tableau 4 fournit les caractéristiques de propagation, avec les mêmes conventions que le tableau 2.

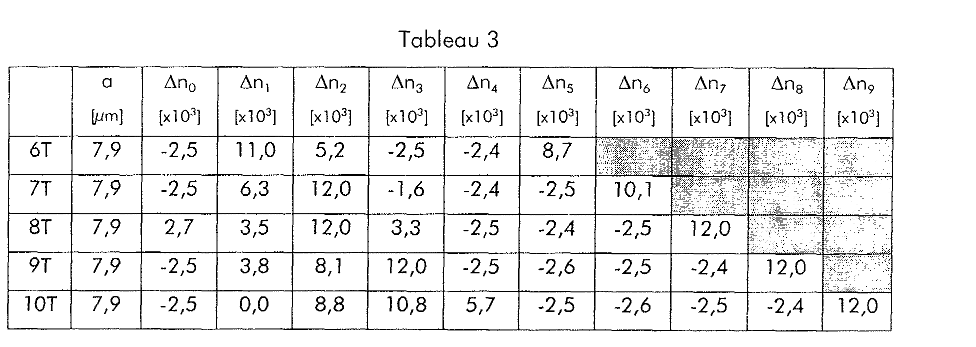

Dans ce tableau, a représente le rayon de coeur de la fibre, i.e. le rayon de la partie de la fibre s'étendant à l'intérieur de la gaine d'indice constant. Le nombre d'échelons dans les exemples du tableau 3 varie entre 6 et 10. Chaque échelon présente une épaisseur constante, qui est égale au rapport entre le rayon de coeur a et le nombre d'échelons dans l'exemple. Dans tous les exemples, le rayon de coeur a reste constant, de sorte à bien démontrer l'influence du nombre d'échelons. Il resterait bien sûr possible de modifier aussi le rayon de coeur, en même, temps que l'on modifie le nombre d'échelons. Dans cette optique, le coeur de la fibre reste défini comme la partie centrale de la fibre, dans laquelle l'indice est inférieur ou supérieur à l'indice de la gaine. Ce coeur peut être défini, suivant les exemples, par au moins 6 échelons.

**Tableau 4**

| | S_{eff} [µm²] @1550nm | C [ps/(nm.km)] @1550nm | C' [ps/(nm².km)] @1550nm | S_{eff}²/C' [µm⁴.nm²km/ps] @1550nm | λ₀ [nm] | 2W₀₂ [µm] @1550nm |
|---|---|---|---|---|---|---|
| 6T | 80 | ∼5 | 0,069 | 92750 | 1490 | 9,27 |
| 7T | 80 | ∼5 | 0,068 | 94120 | 1504 | 9,12 |
| 8T | 78 | ∼4 | 0,063 | 96570 | 1470 | 9,26 |
| 9T | 77 | ∼4 | 0,061 | 97450 | 1492 | 9,01 |
| 10T | 78 | ∼4 | 0,061 | 98460 | 1460 | 9,02 |

Les valeurs du tableau 4 montrent que l'augmentation du nombre d'échelons permet d'optimiser les paramètres de propagation de la fibre. La surface effective est dans tous les exemples plus importante que dans la fibre de l'état de la technique, tandis que la pente de dispersion chromatique est plus faible. En conséquence, le rapport du carré de la surface effective à la pente de dispersion chromatique augmente. Dans les exemples proposés, ce rapport présente des valeurs supérieures à 90 000 µm⁴.nm².km/ps, à comparer à la valeur de 73 000 µm⁴.nm².km/ps de la fibre de l'état de la technique. La dispersion chromatique, la longueur d'onde λ₀ d'annulation de la dispersion chromatique et le diamètre de mode de la fibre restent voisins des valeurs initiales proposées dans l'état de la technique.

Les exemples des tableaux 3 et 4 montrent que l'augmentation du nombre d'échelons dans la fibre, pour atteindre 6 échelons ou plus, permet d'améliorer les caractéristiques de propagation de la fibre. On notera que le passage de 6 échelons à 10 s'accompagne d'une croissance du rapport S_{eff}²/C', et d'une diminution de la pente de dispersion chromatique. Ces effets sont uniquement provoqués par le changement du nombre d'échelons, le rayon de coeur de la fibre restant constant, pour les besoins de la démonstration.

Dans le deuxième exemple, la fibre de l'état de la technique considérée est une fibre à dispersion nulle (All optical regeneration: key features and application to a 160 Gbit/s (4x40 Gbit/s) long-haul transmission, O. Leclerc et al., LEOS, Vol 14, N°4, August 2000). Cette fibre présente un profil d'indice de consigne du type représenté à la figure 2. Les valeurs des rayons et des indices sont fournies dans le tableau 5 ci-dessous.

**Tableau 5**

| a₀ [µm] | a₁ [µm] | a₂ [µm] | Δn₀ [x10³] | Δn₁ [x10³] | Δn₂ [x10³] |
|---|---|---|---|---|---|
| 2,98 | 5,64 | 8,05 | 8,6 | -3,7 | 3,0 |

Le tableau 6 donne avec les mêmes notations que les tableaux 2 et 4 les valeurs des paramètres de propagation de la fibre de l'état de la technique ; on a porté en outre dans le tableau les valeurs de la dispersion chromatique C, en ps/(nm.km), de la longueur d'onde de coupure effective λ_{ceff} exprimée en nm, du rapport de la dispersion chromatique à la pente de dispersion chromatique, exprimé en nm, et des pertes par courbures. Celles-ci sont mesurées d'une part par enroulement de la fibre autour d'un manchon de diamètre 20 mm ; on mesure dans ce cas les pertes linéiques induites par l'enroulement de la fibre. On peut aussi mesurer les pertes par courbure par enroulement de 100 tours de fibre autour d'un manchon de 60 mm de diamètre ; la valeur proposée dans ce cas est en dB et non pas linéique en dB/m. Cette dernière méthode est la plus ancienne ; la première méthode constitue un test plus discriminant, et permet de mieux caractériser la fibre. Sauf pour ce qui est de la longueur d'onde de coupure et des pertes par courbures, les différents paramètres sont mesurés à 1550 nm. Les pertes par courbure sont mesurées à 1625 nm ; dans la mesure où ces pertes sont une fonction croissante de la longueur d'onde, le fait qu'elles présentent une valeur acceptable à 1625 nm suffit pour que les pertes soient aussi acceptables pour des longueurs d'onde inférieures à cette valeur.

**Tableau 6**

| S_{eff} [µm²] @1550nm | C [ps/(nm.km)] @1550nm | C' [ps/(nm².km)] @1550nm | λ_{ceff} [nm] | C/C' [nm] @1550nm | S_{eff}²/C' [µm⁴.nm².km/ps] @1550nm | PCφ20mm [dB/m] @1625nm | PCφ60mm [dB] @1625nm |
|---|---|---|---|---|---|---|---|
| 43 | 0,40 | 0,0246 | <1550 | 16 | 85601 | 44 | 2,9.10⁻⁴ |

On donne maintenant des exemples de fibres selon des modes de réalisation de l'invention. La figure 3 est une représentation schématique du profil d'indice de consigne, dans le cas d'une fibre à 10 échelons. Dans la représentation schématique de la figure 3, le profil d'indice de la fibre reste similaire à celui de la figure 2, avec une partie centrale d'indice supérieur à celui de la gaine, une tranchée d'indice inférieur à celui de la gaine, puis un anneau d'indice supérieur à celui de la gaine. Toutefois, dans la partie centrale, la tranchée comme dans l'anneau, l'indice varie au lieu de présenter, comme à la figure 2, une valeur constante. Dans l'exemple de principe de la figure 3, la partie centrale est constituée de trois échelons d'indice ; la tranchée enterrée est formée de deux échelons d'indice, l'anneau comprend trois échelons d'indice et la seconde tranchée enterrée est constituée de deux échelons d'indice. Les fibres proposées dans les exemples présentent des profils différents, avec notamment un ou plusieurs échelons extérieurs présentant un indice inférieur à celui de la gaine.

Comme le montre la figure 3, chaque échelon de la fibre correspond à une même épaisseur. Ce choix simplifie la fabrication de la fibre, chaque échelon pouvant alors correspondre dans la fabrication d'une préforme par VAD ou MCVD à une (ou plusieurs) passes d'un chalumeau (VAD ou MCVD).

Dans le tableau qui suit apparaissent les paramètres du profil de consigne des différentes fibres ; dans la mesure où les échelons ont la même épaisseur, le tableau ne fait qu'apparaître le rayon total de la fibre. L'épaisseur d'un échelon s'obtient alors en divisant ce rayon total par le nombre d'échelons. Dans la première colonne de ce tableau apparaît donc le rayon extérieur a de la seconde tranchée enterrée, exprimé en micromètres. Chaque échelon d'indice présente une épaisseur qui est sensiblement égale au rapport de ce rayon extérieur par le nombre d'échelons. Les autres colonnes du tableau fournissent la différence entre l'indice d'un échelon et l'indice de la gaine, multiplié par 10³. Les exemples 1a et 2a sont des fibres à six échelons ; les exemples 3a et 4a des fibres à sept échelons ; les exemples 5a et 6a des fibres à 8 échelons ; les exemples 7a et 8a des fibres à 9 échelons, et les exemples 9a et 10a des fibres à 10 échelons.

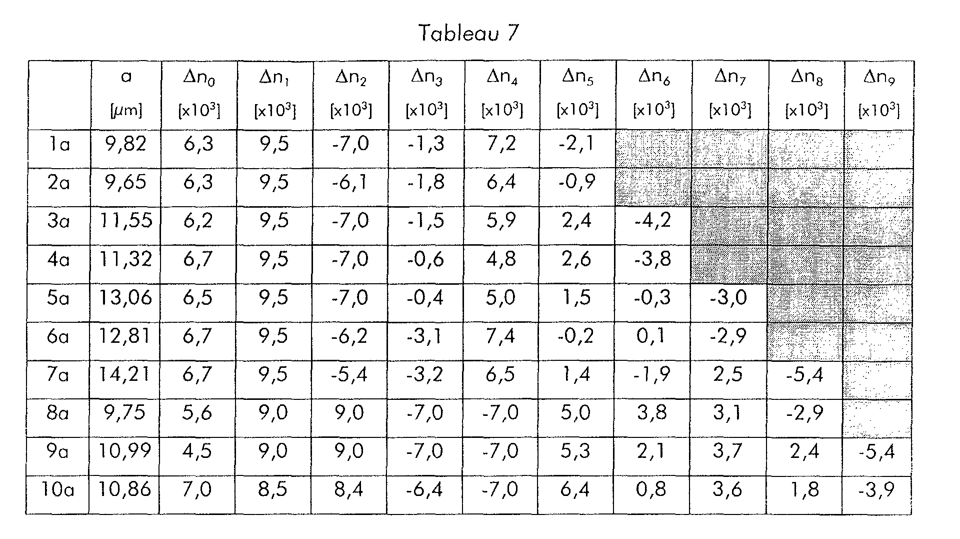

En pratique, le choix de n échelons, avec n un entier entre 6 et 10 et d'une épaisseur de chaque échelon égale au rapport de l'épaisseur totale de la fibre au nombre d'échelons est la solution la plus simple pour la fabrication de la fibre suivant un procédé de dépôt successif des différentes couches formant la préforme à partir de laquelle la fibre peut être étirée. On peut ainsi utiliser un procédé de MCVD (dépôt chimique en phase vapeur modifié) ou encore de VAD ("vapour axial deposition" en langue anglaise). Ces deux techniques, qui sont très connues dans l'état de la technique, permettent de réaliser des fibres présentant un profil complexe avec un grand nombre d'échelons, comme les exemples proposés.

Il est possible de faire varier le nombre des échelons. En particulier, on peut choisir un nombre d'échelons supérieur à 10, par exemple 1 1 ou 12 ; ces deux autres nombres permettent aussi, dans les procédés précités d'obtenir une préforme d'une taille appropriée ; on peut aussi choisir, pour d'autres procédés ou compte tenu des évolutions des procédés existants, d'autres nombres d'échelons. Il est aussi possible d'obtenir des échelons qui ne correspondent pas à une seule passe dans un procédé de dépôt, mais qui correspondent à plusieurs passes. La valeur minimale de six échelons est proposée dans les exemples, dans la mesure où elle permet des améliorations substantielles par rapport aux fibres de l'état de la technique.

A titre d'exemple, dans les exemples 8a et 9a du tableau 7, les valeurs de Δn₁ et Δn₂ sont identiques ; on peut à ce titre considérer qu'il s'agit d'un échelon unique formé de deux passes (ou plusieurs) dans le procédé de fabrication de la préforme, et non pas de deux échelons. De même, les valeurs de Δn₃ et Δn₄ sont identiques, ce qui correspond à une tranchée enterrée formée d'un échelon en deux (ou plusieurs) passes dans le procédé de fabrication de la préforme. Dans l'exemple 8a, le profil présente donc :
- une partie centrale avec un indice supérieur à l'indice de la gaine, avec un premier échelon et un deuxième échelon d'une épaisseur double de celle du premier échelon ;
- une tranchée enterrée formée d'un seul échelon ;
- un anneau d'indice supérieur à l'indice de la gaine, formé de trois échelons ; et
- une deuxième tranchée enterrée formée d'un seul échelon.
On peut donc qualifier la fibre en indiquant qu'elle présente sept échelons, d'épaisseurs différentes. Un échelon est alors défini comme une partie de la fibre dans laquelle l'indice de consigne présente une valeur constante ; l'échelon peut correspondre physiquement à une ou plusieurs passes lors de la fabrication de la préforme. On comprend ainsi que le nombre d'échelons comme la taille des échelons peuvent varier.

Le tableau 8 indique les caractéristiques optiques des fibres du tableau 7, avec les mêmes notations que dans le tableau 6.

**Tableau 8**

| | S_{eff} [µm²] @1550nm | C [ps/(nm.km)] @1550nm | C' [ps/(nm².km]] @1550nm | λ_{ceff} [nm] | C/C' [nm] @1550nm | S_{eff}²/C' [µm⁴.nm².km/ps] @1550nm | PCφ>20mm [dB/m] @1625nm | PCφ60mm [dB] @1625nm |
|---|---|---|---|---|---|---|---|---|
| 1a | 50 | 0,98 | 0,0222 | <1550 | 44 | 112388 | 47 | 3,7.10⁻⁴ |
| 2a | 50 | 0,96 | 0,0227 | <1550 | 42 | 108333 | 47 | 3,6.10⁻⁴ |
| 3a | 51 | 0,79 | 0,0216 | <1550 | 37 | 118722 | 35 | 2,8.10⁻⁴ |
| 4a | 48 | 0,53 | 0,0215 | <1550 | 25 | 107297 | 28 | 1,5.10⁻⁴ |
| 5a | 49 | 0,36 | 0,0218 | <1550 | 16 | 111445 | 46 | 2,2.10⁻⁴ |
| 6a | 49 | 0,41 | 0,0218 | <1550 | 19 | 108435 | 49 | 2,8.10⁻⁴ |
| 7a | 49 | 0,15 | 0,0217 | <1550 | 7 | 109115 | 37 | 1,8.10⁻⁴ |
| 8a | 47 | 0,46 | 0,0212 | <1550 | 22 | 106337 | 49 | 2,7.10⁻⁵ |
| 9a | 50 | 0,26 | 0,0231 | <1550 | 11 | 107663 | 46 | 5,3.10⁻⁴ |
| 10a | 47 | 0,19 | 0,0212 | <1550 | 9 | 104198 | 42 | 2,7.10⁻⁴ |

Le tableau montre que la fibre de l'invention, dans les différents exemples, présente une surface effective supérieure S_{eff} à celle de la fibre de l'état de la technique, une dispersion chromatique C similaire, une pente de dispersion C' plus faible, une longueur d'onde de coupure λ_{ceff} similaire, un meilleur rapport du carré de la surface effective à la pente de dispersion chromatique et des pertes par courbure semblables.

La comparaison montre que la fibre de l'invention présente du point de vue de la propagation des caractéristiques optiques meilleures que celles de la fibre de l'état de la technique. Ceci est notamment dû à une meilleure optimisation de la fibre par le choix d'un nombre d'échelons plus important. Les valeurs différentes de la dispersion chromatique montrent que la fibre de l'invention peut s'adapter à différentes utilisations, en fonction de la dispersion chromatique souhaitée.

On décrit un troisième exemple de mise en oeuvre de l'invention. On considère une fibre de l'état de la technique, qui correspond à l'exemple B de la demande FR-A-00 02 316. La fibre présente un profil d'indice de consigne similaire à celui de la figure 2, et on utilise dans la suite de la description les mêmes notations que ci-dessus.

Le tableau 9 ci-dessous donne les caractéristiques de la fibre de l'état de la technique, avec les mêmes notations que le tableau 5.

**Tableau 9**

| a₀ [µm] | a₁ [µm] | a₂ [µm] | Δn₀ [x10³] | Δn₁ [x10³] | Δn₂ [x10³] |
|---|---|---|---|---|---|
| 3,56 | 5,74 | 10,94 | 7,1 | -6,4 | 1,1 |

Avec ce profil, la fibre de l'état de la technique présente les caractéristiques de propagations données dans le tableau 10, avec les mêmes notations que dans le tableau 6.

**Tableau 10**

| S_{eff} [µm²] @1550nm | C [ps/(nm.km)] @1550nm | C' [ps/(nm².km)] @1550nm | λ_{ceff} [nm] | C/C' [nm] @1550nm | S_{eff}²/C' [µm⁴.nm².km/ps] @1550nm | PCφ20mm [dB/m] @1625nm | PCφ60mm [dB] @1625nm |
|---|---|---|---|---|---|---|---|
| 51 | 8,0 | 0,032 | <1550 | 250 | 81250 | 40 | <10⁻³ |

Le tableau 11 est analogue au tableau 7 et montre des valeurs possibles de l'indice pour différentes fibres de l'invention, avec les mêmes notations ; le tableau comprend toutefois trois exemples à huit échelons, trois exemples à neuf échelons et quatre exemples avec 10 échelons.

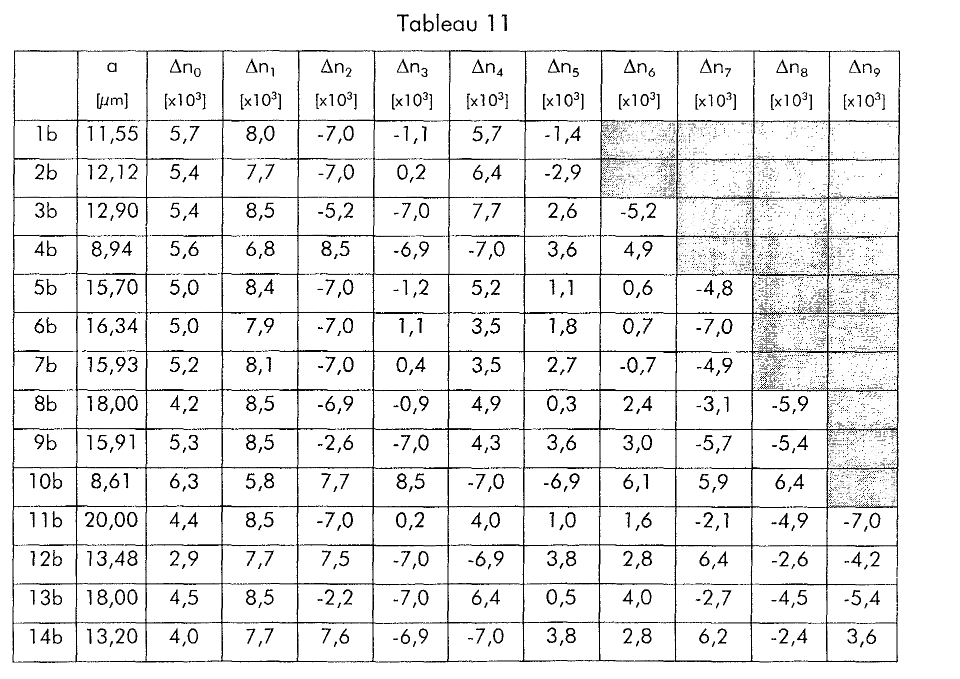

Le tableau 12, est similaire au tableau 8 et présente les mêmes notations ; il indique les caractéristiques optiques des fibres du tableau 11.

**Tableau 12**

| | S_{eff} [µm²] @1550nm | C [ps/(nm.km)] @1550nm | C' [ps/(nm².km)] @1550nm | λ_{ceff} [nm] | C/C' [nm] @1550nm | S_{eff}²/C' [µm⁴.nm².km/ps] @1550nm | PCφ20mm [dB/m] @1625nm | PCφ60mm [dB] @1625nm |
|---|---|---|---|---|---|---|---|---|
| 1b | 54 | 8,3 | 0,0233 | <1550 | 356 | 125660 | 38 | 2,0.10⁻⁴ |
| 2b | 61 | 8,4 | 0,0286 | <1550 | 294 | 127071 | 42 | 1,3.10⁻⁴ |
| 3b | 54 | 8,2 | 0,0223 | <1550 | 367 | 132268 | 29 | 1,5.10⁻⁴ |
| 4b | 54 | 8,4 | 0,0227 | <1550 | 370 | 126800 | 43 | 1,5.10⁻⁴ |
| 5b | 58 | 8,0 | 0,0224 | <1550 | 357 | 149920 | 40 | 1,0.10⁻⁴ |
| 6b | 62 | 8,1 | 0,0257 | <1550 | 315 | 149282 | 42 | 1,2.10⁻⁴ |
| 7b | 59 | 8,0 | 0,0236 | <1550 | 339 | 147200 | 37 | 8,5.10⁻⁵ |
| 8b | 62 | 7,7 | 0,0246 | <1550 | 321 | 156714 | 18 | 1,1.10⁻⁴ |
| 9b | 55 | 7,8 | 0,0228 | <1550 | 342 | 133497 | 14 | 4,2.10⁻⁵ |
| 10b | 54 | 8,3 | 0,0224 | <1550 | 371 | 127875 | 44 | 1,6.10⁻⁴ |
| 11b | 62 | 7,5 | 0,0251 | <1550 | 299 | 153048 | 9 | 2,7.10⁻⁵ |
| 12b | 60 | 8,1 | 0,0248 | <1550 | 327 | 145500 | 21 | 4,6.10⁻⁴ |
| 13b | 60 | 7,7 | 0,0275 | <1550 | 280 | 132180 | 15 | 5,6.10⁻⁵ |
| 14b | 57 | 7,9 | 0,0220 | <1550 | 360 | 146750 | 45 | 1,6.10⁻⁴ |

Comme dans les exemples précédents, il apparaît que les fibres de l'invention présentent, par rapport à la fibre de l'état de la technique utilisée pour la comparaison, une surface effective S_{eff} supérieure, une pente de dispersion C' plus faible, et surtout un meilleur rapport du carré de la surface effective à la pente de dispersion chromatique.

Les tableaux 13 à 16 proposent encore des exemples de fibres selon l'invention, avec différents profils ; les notations sont les mêmes que dans les tableaux précédents. Les fibres correspondantes présentent des valeurs de dispersion chromatique voisines respectivement de 5 et 10 ps/(nm.km). Les caractéristiques de propagation des fibres présentant le profil de consigne du tableau 13 sont fournies dans le tableau 14, tandis que les caractéristiques de propagation des fibres présentant le profil de consigne du tableau 15 sont fournies dans le tableau 16.

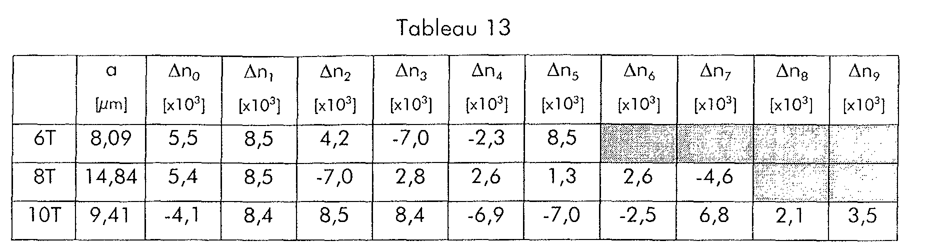

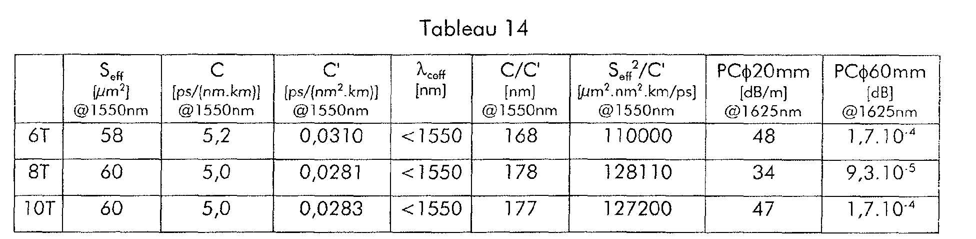

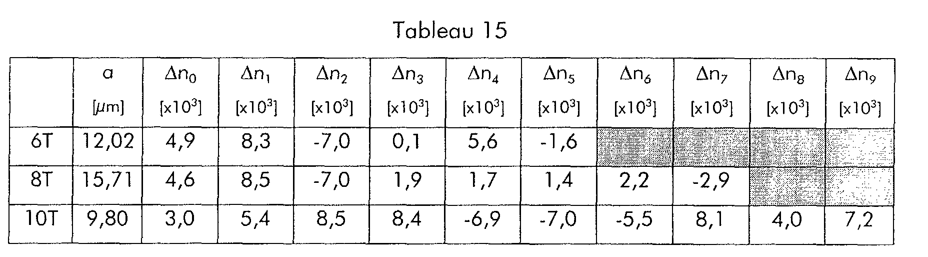

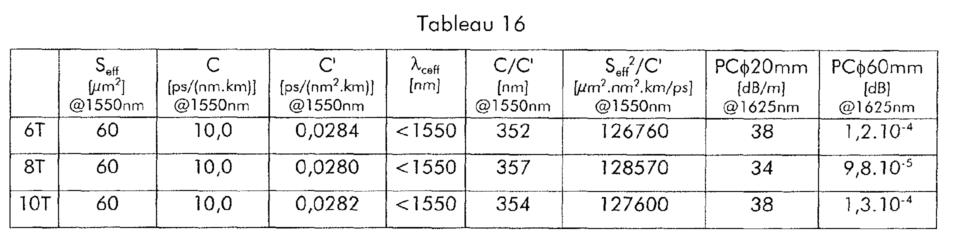

Ainsi, les différents exemples proposés montrent que l'invention permet d'améliorer les caractéristiques des fibres de l'état de la technique, en utilisant simplement et judicieusement les possibilités offertes par la technologie de fabrication des préformes.

Pour la réalisation de l'invention, on peut procéder comme suit. On part d'un profil de consigne d'une fibre de l'état de la technique - par exemple une fibre à trois échelons, comme proposé plus haut. Partant de cette fibre, on fixe un nombre d'échelons, supérieur ou égal à six ; à ce stade, on peut aussi répartir les échelons, en suivant globalement le profil de la fibre de l'état de la technique. On fait ensuite varier les valeurs d'indice pour les différents échelons, en partant des valeurs initiales. A cet effet, on peut utiliser un programme d'optimisation ; les valeurs à optimiser sont les valeurs d'indice et les rayons des différents échelons ; les valeurs de départ sont les valeurs correspondant au profil de l'état de la technique, comme on vient de le mentionner. Le paramètre d'optimisation, qui peut être un scalaire ou un vecteur, est fonction des caractéristiques de propagation de la fibre. On peut notamment utiliser comme paramètre d'optimisation le rapport entre le carré de la surface effective et la pente de la dispersion chromatique. On peut aussi limiter les gradients d'indice, en imposant une limite maximale aux différences entre les indices de deux échelons, dans une zone donnée de la fibre ; par exemple, on peut imposer une limite dans la zone du coeur de fibre, ou dans la zone de la tranchée enterrée. Il est manifeste qu'une telle limite est inférieure à la variation globale d'indice sur la fibre, et par exemple à la variation d'indice entre un échelon d'indice positif et un échelon voisin d'indice négatif.

L'optimisation peut être réalisée avec les outils d'optimisation basés sur des algorithmes d'optimisation connus en soi : Simplex, Gradients Conjugués, Quasi-Newton et algorithme génétique. Les valeurs initiales sont choisies à partir des fibres de l'état de la technique utilisées à titre de comparaison, en découpant le profil en un nombre d'échelons de même épaisseur. Le paramètre d'optimisation est le rapport entre le carré de la surface effective et la pente de dispersion chromatique.

Dans tous les cas, la fibre présente une dispersion chromatique positive à une longueur d'onde de 1550 nm; ceci permet de l'utiliser comme fibre de ligne dans un système de transmission à fibre optique. Il est aussi avantageux que la fibre présente, à une longueur d'onde de 1550 nm, une pente de dispersion chromatique inférieure ou égale à 0,08 ps/(nm².km). La borne sur la pente de la dispersion chromatique assure de bonnes performances d'un point de vue système en garantissant une variation réduite de la dispersion sur une large bande spectrale.

Les exemples contenus dans les tableaux 7-8 (0<C<1 ps/(nm.km)) et 11-12 (C∼8 ps/(nm.km)) vérifient ces contraintes sur la dispersion chromatique comme sur la pente de dispersion chromatique. Dans les tableaux 7 et 8, la fibre présente une dispersion chromatique faible - comme dans la fibre de l'état de la technique des tableaux 5 et 6 ; ceci correspond à des fibres optimisées pour des solitons managés en dispersion et utilisées pour des transmissions longue distance, comme les transmissions sous-marines. En revanche, une dispersion chromatique voisine de 8 ps/(nm.km), comme dans les fibres des tableaux 9 à 12, correspond à une optimisation pour des transmissions à 40 Gbit/s.

Il est aussi avantageux que la dispersion chromatique à 1550 nm soit inférieure à 14 ps/(nm.km). Au-dessus de cette borne, il est aussi simple de fabriquer une fibre à saut d'indice.

La fibre de l'invention peut avantageusement être utilisée comme fibre de ligne dans un système de transmission.

Bien entendu, l'invention n'est pas limitée aux modes de réalisation décrits en détail. On rappelle notamment que le nombre d'échelons peut varier. Dans l'optimisation, il n'est pas indispensable de partir d'une fibre de l'état de la technique ; cette solution a l'avantage d'accélérer l'optimisation, mais on pourrait aussi partir de valeur d'indice identiques pour tous les échelons.

## Revendications

1. Une fibre optique présentant un profil d'indice de consigne avec plus de six échelons et une dispersion chromatique positive pour une longueur d'onde de 1550 nm.

2. La fibre de la revendication 1, **caractérisée en ce qu'**elle présente, pour une longueur d'onde de 1550 nm, un rapport du carré de la surface effective à la pente de dispersion chromatique supérieur à 90 000 µm⁴.nm².km/ps.

3. La fibre de la revendication 1, **caractérisée en ce qu'**elle présente, pour une longueur d'onde de 1550 nm, un rapport du carré de la surface effective à la pente de dispersion chromatique supérieur à 100 000 µm⁴.nm².km/ps.

4. La fibre de la revendication 1, 2 ou 3, **caractérisée en ce qu'**elle présente pour une longueur d'onde de 1550 nm une pente de dispersion chromatique inférieure ou égale à 0,08 ps/(nm².km).

5. La fibre de l'une des revendications 1 à 4, **caractérisée en ce qu'**elle présente pour une longueur d'onde de 1550 nm une dispersion chromatique inférieure ou égale à 14 ps/(nm.km).

6. La fibre de l'une des revendications 1 à 5, **caractérisée en ce que** les échelons présentent une épaisseur identique.

7. La fibre de l'une des revendications 1 à 5, **caractérisée en ce qu'**au moins deux échelons ont une épaisseur différente.

8. Un système de transmission à fibre optique, présentant au moins une section de fibre de ligne avec de la fibre selon l'une des revendications 1 à 7,
